## Europäisches Patentamt

## European Patent Office

## Office européen des brevets

(19)

(11) Veröffentlichungsnummer: **0 046 169**
**B1**

(12) **EUROPÄISCHE PATENTSCHRIFT**

(45) Veröffentlichungstag der Patentschrift:
22.08.84

(51) Int. Cl.³: **A 47 J 43/046,** A 47 J 42/56

(21) Anmeldenummer: **81104122.7**

(22) Anmeldetag: **29.05.81**

(54) **Gerät mit einer Sicherheitsverriegelung.**

(30) Priorität: **20.08.80 DE 3031382**

(43) Veröffentlichungstag der Anmeldung:
**24.02.82 Patentblatt 82/8**

(45) Bekanntmachung des Hinweises auf die Patenterteilung:
**22.08.84 Patentblatt 84/34**

(84) Benannte Vertragsstaaten:
**CH DE FR GB IT LI NL SE**

(56) Entgegenhaltungen:
**EP - A - 0 024 992**
**DE - A - 2 125 423**
**DE - B - 1 111 348**
**FR - A - 2 147 361**
**US - A - 2 740 019**

(73) Patentinhaber: **Braun Aktiengesellschaft,**
**Rüsselsheimer Strasse 22, D-6000 Frankfurt/Main (DE)**

(72) Erfinder: *Falkenbach, Günther, Leiershohlstrasse 18a,*
*D-6236 Eschborn (DE)*

(74) Vertreter: **Einsele, Rolf, Braun Aktiengesellschaft**
**Postfach 1120 Frankfurter Strasse 145, D-6242 Kronberg**
**Taunus (DE)**

## Beschreibung

Die Erfindung bezieht sich auf ein Gerät mit einem einen Motor aufweisenden Sockel, einem darauf aufgesetzten, abnehmbaren Behälter, einem abnehmbaren Behälterdeckel und einer Sicherheitsverriegelung zur Stromunterbrechung des Motors bei nicht aufgesetztem Behälter oder Behälterdeckel.

Geräte dieser Art sind in erster Linie als Speisebereiter im Haushalt allgemein gebräuchlich. Vor allem, wenn es sich dabei um einen Zerkleinerer mit umlaufendem Messer handelt, wäre es äusserst gefährlich, wenn die Möglichkeit bestünde, bei geöffnetem Gerät, also bei abgenommenen Deckel oder Behälter, den Motor des Gerätes und damit das Messer anlaufen zu lassen.

Sicherheitsverriegelungen für solche Geräte bestehen bisher in den meisten Fällen aus einem mechanischen Schalter, welcher beim Aufsetzen des Deckels auf den Behälter zwangsläufig betätigt wird. Eine derartige Verriegelung ist beispielsweise in der FR-A 2 147 361 beschrieben. Bekannt ist es auch, an einem Speisebereiter zwei von Hand zu betätigende Schalter vorzusehen. Dabei dient ein Schalter zum An- und Abschalten des Motors des Gerätes, während mit einem zweiten Schalter der Deckel entriegelt werden kann. Beide Schalter sind gegenseitig derart verriegelt, dass der Deckelentriegelungsschalter nur in Entriegelungsstellung gebracht werden kann, wenn der Motorschalter in Nullstellung sich befindet und umgekehrt der Motorschalter nur in Einschaltstellung zu bringen ist, wenn der Deckelentriegelungsschalter bei aufgesetztem Deckel in Verriegelungsstellung geschaltet ist.

Diese letztgenannte Art der Sicherheitsverriegelung hat sich zwar als zuverlässig und robust erwiesen, sie ist jedoch in der Handhabung umständlich, da immer zwei Schalter zu betätigen sind. Die erstgenannte Sicherheitsverriegelung, bei der ein mechanischer Schalter vom Deckel zwangsläufig betätigt wird, ist zwar in der Handhabung bequemer, es besteht jedoch bei ihr die Gefahr, dass der Schalter z.B. infolge Verschmutzung klemmt und dabei stets in Einschaltstellung verbleibt. Die Sicherheitsverriegelung besteht dann nicht mehr.

Weitere Sicherheitsverriegelungen sind aus der EP-A 0 024 992 bekannt, bei denen mittels eines durch den aufgesetzten Behälterdeckel mechanisch oder magnetisch betätigten Stössels die Stromzufuhr zum Antriebsmotor freigegeben wird.

Allen diesen bekannten Sicherheitsverriegelungen ist gemeinsam, dass die durch das Aufsetzen des Behälterdeckels eingeleitete Wirkungsfolge, die zur Entriegelung des Motors führt, nur in einer Richtung — vom Deckel über den Behälter zum Sockel — abläuft, so dass die Verriegelung nur einfach abgesichert ist. Der vorliegenden Erfindung lag daher die Aufgabe zugrunde, mit einfachen Mitteln eine Verriegelung mit gesteigertem Sicherheitseffekt zu schaffen, die völlig selbsttätig arbeitet, keinen manuell zu bedienenden zweiten Schalter erfordert, gegen Verschmutzung unempfindlich ist — bei der also eine Verschmutzung auf keinen Fall das unbeabsichtigte Einschalten des Motors bewirken oder ermöglichen kann — und deren Zuverlässigkeit nicht nur den einzelnen Verriegelungsvorgang, sondern dessen ständige Wiederholung während der gesamten Lebensdauer des Gerätes noch sicherer macht, als es mit den bisher bekannten Vorrichtungen möglich war.

Diese Aufgabe wird erfindungsgemäss durch die im Anspruch 1 angegebenen Massnahmen gelöst.

Die erzielte Steigerung des Sicherheitseffektes rührt in erster Linie daher, dass an die Stelle der bekannten, zur Entriegelung eingerichteten Wirkungskette erfindungsgemäss ein geschlossener Signalkreis gesetzt wurde, der die Stromzufuhr zum Motor erst dann freigibt, wenn das Kontrollsignal die Stationen Sockel - Behälter - Deckel auf einem Hin- und einem Rückweg — also doppelt — durchlaufen hat. Ein weiterer Vorteil der vorliegenden Erfindung besteht darin, dass die erfindungsgemässe Sicherheitsverriegelung keine mechanisch beweglichen Teile benötigt, welche z.B. durch Verschmutzung, Verschleiss oder Korrosion klemmen können. Sie arbeitet deshalb insbesondere auch bei Verschmutzung des Gerätes und nach langen Jahren der Benutzung jederzeit zuverlässig.

Die erfindungsgemässe Sicherheitsverriegelung arbeitet auch dann einwandfrei, wenn der Deckel des Gerätes auf einem besonders hohen, vom Gerätesockel abnehmbaren Behälter sitzt, da das im Gerätesockel erzeugte Signal nicht auf mechanischem Wege durch den Behälter zum Deckel geleitet werden muss. Vorteilhaft ist es auch, dass die erfindungsgemässe Sicherheitsverriegelung keiner Abnützung unterliegt und eine Fehlbedienung bei ihr ausgeschlossen ist.

Die technische Ausführung der Sicherheitsverriegelung kann vielfältig sein. Sie kann optisch durch einen am Behälter hochgeführten Lichtstrahl, aber auch induktiv magnetisch oder mittels Schaltsignalen arbeiten. Der Grundgedanke der Erfindung besteht immer darin, einen Signalkreis vom Sockel durch den Behälter und den Deckel des Gerätes zu bilden. Nur wenn dieser Kreis geschlossen ist, kann der Motor des Gerätes angeschaltet werden. Fehlt der Deckel oder Behälter des Gerätes, dann ist der Kreis offen und damit ein Anlaufen des Motors ausgeschlossen.

Konstruktiv besonders einfach wird ein Gerät mit Sicherheitsverriegelung, wenn es die im Anspruch 2 aufgeführten Merkmale aufweist. Günstig ist es dabei auch, dass die verwendeten Bauteile alle an sich bekannt und auf anderen Anwendungsgebieten seit langem bewährt sind. So können z.B. als Signalableit- und -rückleiteinrichtung Lichtleitfasern Verwendung finden, wenn erfindungsgemäss mit optischen Signalen gearbeitet wird.

Besonders vorteilhaft ist die Ausgestaltung der Erfindung gemäss Anspruch 3. Als Lichtumlenkeinrichtungen können dabei einfache Spiegel oder Prismen verwendet werden.

Um die Gefahr zu mindern, dass Schmutz in die Rohre fällt, durch die das Licht entlang der Behälterwandung geführt wird, ist die Ausgestaltung gemäss Anspruch 4 vorteilhaft, bei der die oberen Enden der Rohre um 90° abgewinkelt und damit ihre Öffnungen nicht nach oben, sondern in die Horizontale gerichtet sind.

Ganz besonders robust und schmutzunempfindlich wird das Gerät durch die gekennzeichneten Merkmale des Anspruchs 5.

Durch die Ausgestaltung der Erfindung gemäss Anspruch 6, bei der im Behälterdeckel Magnete angeordnet sind, wird durch die Sicherheitsverriegelung zusätzlich erreicht, dass der Deckel durch magnetische Kräfte in Schliessstellung auf dem Behälter festgehalten wird.

Die Erfindung lässt zahlreiche Ausführungsmöglichkeiten zu. Drei besonders vorteilhafte Varianten sind in der Zeichnung schematisch dargestellt und werden nachfolgend beschrieben, und zwar zeigen

Figur 1 das Schema einer ersten Ausführungsform eines Gerätes mit Sicherheitsverriegelung;

Figur 2 eine Teilansicht eines Gerätes mit einer nach dem in Figur 1 dargestellten Prinzip arbeitenden Sicherheitsverriegelung;

Figur 3 ein weiteres Grundprinzip einer Sicherheitsverriegelung;

Figur 4 einen Behälter mit einer dritten prinzipiellen Möglichkeit der Sicherheitsverriegelung.

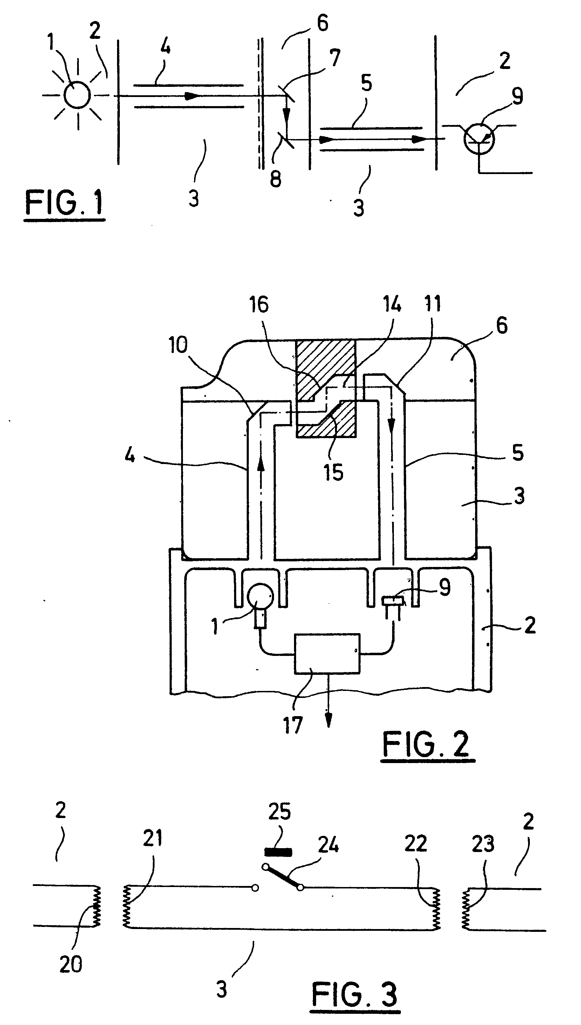

Bei dem in Figur 1 dargestellten Grundprinzip der Erfindung ist als Signalerzeuger eine Lampe 1 dargestellt, welche im Sockel 2 eines Gerätes angeordnet sein soll. Ein auf den Sockel 2 aufsetzbarer Behälter 3 weist als Signalableiteinrichtung ein erstes Rohr 4 und als Signalrückleiteinrichtung ein zweites Rohr 5 auf. Die Rohre 4 und 5 sind zueinander höhenversetzt. Licht kann deshalb nur dann vom Rohr 4 in das zweite Rohr 5 gelangen, wenn der Behälterdeckel 6 auf den Behälter 3 aufgesetzt ist. Der Behälterdeckel 6 enthält zwei Umlenkspiegel 7 und 8, durch die Licht vom Rohr 4 in das Rohr 5 gespiegelt wird. Im Sockel 2 ist hinter dem Rohr 5 ein Fototransistor 9 angeordnet, welcher die Einschaltung des nicht dargestellten Motors auslöst.

Figur 2 zeigt das in Figur 1 dargestellte Prinzip konkreter am Beispiel eines Speisebereiters. Die Rohre 4 und 5 sind aussen am Behälter 3 entlanggeführt. Dabei sind die Enden der Rohre 4 und 5 um 90° abgewinkelt. Umlenkspiegel 10 und 11 sorgen dafür, dass das Licht entsprechend um 90° umgelenkt wird. Im Deckel 6 ist ein Kanal 14 mit zwei weiteren Umlenkspiegeln 15 und 16 angeordnet, durch die das Licht vom Ende des Rohres 4 zum Rohr 5 gespiegelt wird. Vom Fototransistor 9 wird das durch das auftretende Licht erzeugte Signal einem Optokoppler 17 zugeführt, der die Einschaltung des Motors des Gerätes bewirkt.

Figur 3 zeigt, dass der Erfindungsgedanke auch mit induktiven Signalen zu verwirklichen ist. Im Behältersockel 2 ist eine Primärspule 20 angeordnet, der im Behälter 3 eine Sekundärspule 21 zugeordnet ist. Diese Sekundärspule 21 ist ihrerseits mit einer zweiten Spule 22 im Behälter 3 verbunden. Die Verbindung der Sekundärspule 21 mit der zweiten Spule 22 erfolgt über einen Magnetschalter 24, der von einem im Deckel angeordneten Magneten 25 betätigt wird. Durch diese Ausgestaltung wird erreicht, dass nur bei aufgesetztem Deckel 6 die Verbindung zwischen der Sekundärspule 21 und der zweiten Spule 22 geschlossen ist. Weiterhin muss der Behälter 3 auf den Sockel 2 aufgesetzt sein, damit durch Induktion von der Primärspule 20 ein Signal zur Spule 23 gelangen kann, von der aus die Einschaltung des Gerätemotors gesteuert wird.

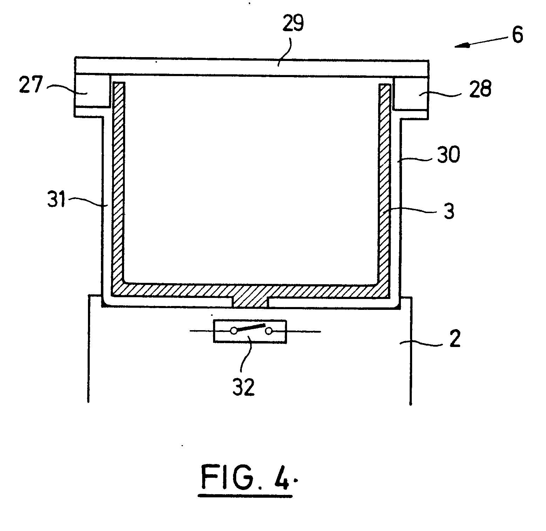

Figur 4 zeigt, dass der Erfindungsgedanke auch mit magnetischen Kräften realisiert werden kann. Im Deckel 6 des Behälters 3 sind zwei Magnete 27 und 28 vorgesehen, welche durch ein Joch 29 miteinander verbunden sind. Die magnetischen Kraftlinien werden vom Deckel 6 über zwei magnetische Leiter 30, 31, die an der Behälterwandung angebracht sind, zum Behälterboden geführt. Diese Leiter 30, 31 berühren sich im Behälterboden nicht. Sie weisen vielmehr eine Unterbrechung auf. Der Unterbrechung gegenüber liegt im Sockel 2 des Gerätes ein Reed-Kontakt 32, mit dem die Einschaltung des Gerätemotors gesteuert wird. Sobald der Deckel 6 ordnungsgemäss auf den Behälter 3 aufgesetzt ist, wird der Magnetismus der Magnete 27, 28 zu den Enden der Leiter 30, 31 geleitet, so dass der Reed-Kontakt 32 betätigt und damit der Motor des Gerätes freigegeben wird.

## Patentansprüche

1. Gerät mit einem einen Motor aufweisenden Sockel, einem darauf aufgesetzten, abhebbaren Behälter, einem abnehmbaren Behälterdeckel und einer Sicherheitsverriegelung zur Stromunterbrechung des Motors bei nicht aufgesetztem Behälter oder Behälterdeckel, gekennzeichnet durch eine Sicherheitsverriegelung, in der bei ordnungsgemässer Zusammenstellung von Sockel, Behälter und Deckel folgende Elemente einen geschlossenen Signalkreis für optische, magnetische und/oder elektromagnetische Signale bilden:
— ein Signalerzeuger (1) im Sockel (2),
— eine Signalableitvorrichtung (4) im Behälter (3),
— eine Signalüberbrückungseinrichtung (14, 15, 16) im Deckel,
— eine Signalrückleiteinrichtung (5) im Behälter (3)
— und ein Signalempfänger (9) im Sockel (2), welcher mit dem Motorschalter in Verbindung steht.

2. Gerät nach Anspruch 1, dadurch gekennzeichnet, dass der Signalerzeuger eine Lampe (1) im Sockel (2) des Gerätes, die Signalableit- und -rückleiteinrichtung je eine Lichtleiteinrichtung an der Aussenwand des Behälters (3), die Signalüberbrückungseinrichtung ebenfalls eine Lichtleiteinrichtung im Deckel (6) und der Signalempfänger ein Fototransistor (9) im Sockel (2) ist.

3. Gerät nach Anspruch 2, dadurch gekennzeichnet, dass die Lichtleiteinrichtungen für die Signalableitung und -rückleitung aus entlang dem Behälter (3) geführten Rohren (4, 5) und die Signalüberbrückungseinrichtung aus einem bei aufgesetztem Behälterdeckel (6) die Enden der Rohre miteinander verbindenden Kanal (14) mit Lichtumlenkeinrichtungen (15, 16) besteht.

4. Gerät nach Anspruch 2 oder 3, dadurch gekennzeichnet, dass die Enden der Rohre (4, 5) aufeinander gerichtet, jedoch höhenversetzt sind und diese Höhendifferenz durch eine zweimalige Lichtumlenkung im Kanal (14) des Behälterdeckels (6) ausgeglichen ist.

5. Gerät nach Anspruch 1, dadurch gekennzeichnet, dass als Signalerzeuger eine Primärspule (20) im Sockel (2) vorgesehen ist, dass gegenüber dieser Primärspule als Signalableiter eine Sekundärspule (21) im Behälter (3) angeordnet ist, die mit der als Signalrückleiter wirkenden Primärspule (22) einen durch den Magnetschalter (24) unterbrochenen elektrischen Leiterkreis bildet, dass die Signalüberbrückungseinrichtung aus einem den Magnetschalter (24) beaufschlagenden, im Deckel (6) angeordneten Magneten (25) besteht und dass der Signalempfänger eine der Primärspule (22) zugeordnete, im Sockel (2) angebrachte Sekundärspule (23) ist.

6. Gerät mit einem einen Motor aufweisenden Sockel, einem darauf aufgesetzten, abhebbaren Behälter, einem abnehmbaren Behälterdeckel und einer Sicherheitsverriegelung zur Stromunterbrechung des Motors bei nicht aufgesetztem Behälter oder Behälterdeckel, in der die Entriegelung durch Magnetkräfte erfolgt, gekennzeichnet durch eine Sicherheitsverriegelung, in der bei ordnungsgemässer Zusammenstellung von Sockel, Behälter und Deckel folgende Elemente zu einem magnetischen Kreisfluss kombiniert sind:
— zwei im Deckelrand einander diametral gegenüberliegende, durch ein magnetisches Joch (29) verbundene Permanentmagnete (27, 28)
— ein gegenüber den Magneten (27, 28) in die Behälterwand und den Behälterboden eingearbeiteter magnetischer Leiter, der durch eine Unterbrechung im Behälterboden in zwei Abschnitte (30, 31) unterteilt ist
— und ein im Sockel fluchtend zu dieser Unterbrechung angeordneter Reed-Kontakt zur Einschaltung des Motors.

**Claims**

1. Appliance with a base having a motor, a removable container mounted thereon, a removable container cover and a safety interlock for interrupting the power supply of the motor when the container or container cover are not mounted, characterized by a safety interlock in which, in the case of the correct assembly of the base, container and cover, the following elements form a closed signal circuit for optical, magnetic and/or electromagnetic signals:
— a signal generator (1) in base (2),
— a signal conducting device (4) in container (3),
— a signal bridging device (14, 15, 16) in the cover,
— a signal return device (5) in container (3),
— and a signal receiver (9) in the base, which is connected to the motor switch.

2. Appliance according to claim 1, characterized in that the signal generator is a lamp (1) in the appliance base (2), the signal conducting and return device is in each case a photoconductor device on the outer wall of container (3), the signal bridging device is also a photoconductor device in cover (6) and the signal receiver is a phototransistor (9) in base (2).

3. Appliance according to claim 2, characterized in that the photoconductor devices for the signal conducting and return devices comprises tubes (4, 5) passing along the container (3) and the signal bridging device comprises a duct (14) interconnecting the tube ends when the container cover (6) is fitted and having light deflection devices (15, 16).

4. Appliance according to claim 2 or 3, characterized in that the ends of tubes (4, 5) are directed towards one another, but are vertically displaced and this height difference is compensated by a double light deflection in duct (14) of container cover (6).

5. Appliance according to claim 1, characterized in that a primary coil (20) is provided in base (2) as the signal generator, that opposite said primary coil a secondary coil (21) as the signal conducting device is arranged in container (3) and together with the primary coil (22) acting as the signal return device forms an electrical conductor circuit interrupted by the solenoid switch (24), that the signal bridging device comprises a magnet (25) arranged in cover (6) and acting on solenoid switch (24) and that the signal receiver is a secondary coil (23) arranged in base (2) and associated with primary coil (22).

6. Appliance with a base having a motor, a removable container fitted thereon, a removable container cover and a safety interlock for interrupting the power supply to the motor when the container or container cover are not fitted, in which unlocking takes place by magnetic forces, characterized by a safety interlock, in which in the case of the correct assembly of the base, container and cover, the following elements are combined to form a circular magnetic flux:
— two permanent magnets (27, 28) arranged in diametrically facing manner in the cover rim and connected by a magnetic yoke (29),
— a magnetic conductor incorporated into the container wall and bottom having magnets (27, 28) and which is subdivided into two portions (30, 31) by a gap in the container bottom,
— and a reed contact for switching on the motor arranged in the base and aligned in said gap.

**Revendications**

1. Appareil comportant un socle présentant un moteur, un récipient amovible posé sur ce socle, un couvercle de récipient amovible et un verrouillage de sécurité pour interrompre l'alimentation du moteur en courant lorsque le récipient n'est pas placé sur le socle ou que le couvercle n'est pas placé sur le récipient, caractérisé par un verrouillage de sécurité dans lequel, lorsque le socle, le récipient, le couvercle sont montés correctement, les éléments suivants forment une chaîne fermée de signaux pour des signaux optiques, magnétiques, et/ou électromagnétiques:
— un émetteur de signaux (1) dans le socle (2),
— un dispositif de transmission aller des signaux (4) dans le récipient (3)
— un dispositif de pontage des signaux (14, 15, 16) dans le couvercle
— un dispositif de transmission retour des signaux (5) dans le récipient (3)
— et un récepteur de signaux (9) dans le socle (2), qui est en liaison avec l'interrupteur du moteur.

2. Appareil selon la revendication 1, caractérisé en ce que l'émetteur de signaux est une lampe (1) dans le socle (2) de l'appareil; en ce que le dispositif de transmission aller des signaux et le dispositif de transmission retour des signaux sont respectivement un dispositif de transmission optique placé contre la paroi externe de l'appareil (3); en ce que le dispositif de pontage des signaux est également un dispositif optique dans le couvercle (6) et en ce que le récepteur de signaux est un photo-transistor (9) dans le socle (2).

3. Appareil selon la revendication 2, caractérisé en ce que le dispositif de transmission optique pour la transmission aller et retour des signaux est constitué de tubes (4, 5) disposés le long du récipient (3); et en ce que le dispositif de pontage des signaux est constitué d'un canal (14) reliant ensemble les extrémités des tubes lorsque le couvercle (6) est posé sur le récipient et comportant des dispositifs de renvoi de la lumière (15, 16).

4. Appareil selon la revendication 2 ou la revendication 3, caractérisé en ce que les extrémités des tubes (4, 5) sont dirigées l'une vers l'autre, mais décalées en hauteur et en ce que cette différence de hauteur est compensée par un double renvoi de la lumière dans le canal (14) du couvercle (6) du récipient.

5. Appareil selon la revendication 1, caractérisé en ce que l'on prévoit comme émetteur de signaux une bobine primaire (20) dans le socle (2); en ce qu'en face de cette bobine primaire est disposée, comme conducteur aller des signaux, dans le récipient (3) une bobine secondaire (21) qui constitue, avec la bobine primaire (22) agissant comme conducteur retour des signaux, un circuit conducteur électrique interrompu par l'interrupteur magnétique (24); en ce que le dispositif de pontage des signaux est constitué d'un aimant (25) disposé dans le couvercle (6) et agissant sur l'interrupteur magnétique (24); et en ce que le récepteur de signaux est une bobine secondaire (23) disposée dans le socle (2) et correspondant à la bobine primaire (22).

6. Appareil comportant un socle présentant un moteur, un récipient amovible posé sur ce socle, un couvercle de récipient amovible et un verrouillage de sécurité pour interrompre l'alimentation du moteur en courant lorsque le récipient n'est pas placé sur le socle ou que le couvercle n'est pas placé sur le récipient, dans lequel le déverrouillage se fait par des forces magnétiques, caractérisé par un verrouillage de sécurité dans lequel, lorsque le socle, le récipient et le couvercle sont montés correctement, les éléments suivants sont combinés pour constituer un circuit de flux magnétique:

— deux aimants permanents (27, 28) situés diamétralement en face l'un de l'autre dans le bord du couvercle et reliés par une culasse magnétique (29)

— un conducteur magnétique inséré en face des aimants (27, 28) dans la paroi du récipient et dans le fond du récipient et divisé en deux tronçons (30, 31) par une interruption dans le fond du récipient

— et un contact Reed disposé dans le socle à l'alignement de cette interruption, pour mise en circuit du moteur.

FIG.1

FIG. 2

FIG. 3

FIG. 4.